# EUROPÄISCHE PATENTSCHRIFT

(11) **EP 1 734 290 B1**
(45) Veröffentlichungstag und Bekanntmachung des Hinweises auf die Patenterteilung: **19.03.2008**
(21) Anmeldenummer: 06009905.8
(22) Anmeldetag: 13.05.2006
(51) Int. Cl.: F16H 63/32

(54) **Betätigungsvorrichtung für eine Schaltmuffe in einem Zahnräderwechselgetriebe**
Actuation device for a coupling sleeve of a gearbox
Dispositif d'actionnement d'un manchon d'accouplement d'une boîte de vitesses

(30) Priorität: 17.06.2005 DE 102005028094
(43) Veröffentlichungstag der Anmeldung: 20.12.2006
(73) Patentinhaber: Schaeffler KG, 91074 Herzogenaurach (DE)
(72) Erfinder: Pechtl, Volker, 92224 Amberg (DE); Schnapp, Peter, 90431 Nürnberg (DE)

(56) Entgegenhaltungen:
- EP-A1- 1 072 826
- DE-C- 925 152
- FR-A- 1 350 298
- JP-A- 58 195 222
- JP-A- 2003 083 448

## Beschreibung

### Gebiet der Erfindung

Die Erfindung betrifft eine Betätigungsvorrichtung für eine Schaltmuffe in einem Zahnräderwechselgetriebe, mit einer zwei Arme aufweisenden Schaltgabel und mindestens einem Führungselement zum Führen der Betätigungsvorrichtung in Achsrichtung der Schaltmuffe sowie einem Mitnehmerelement, das zum Eingriff eines Betätigungsorgans geeignet ist, wobei die Schaltgabel, das mindestens eine Führungselement und das Mitnehmerelement der Betätigungsvorrichtung einteilig und aus einem einzigen Blechteil ausgebildet sind.

### Hintergrund der Erfindung

Eine Betätigungsvorrichtung dieser Art ist beispielsweise aus der EP 1 072 826 A1**,** aus der DE 925 152 C**,** aus der FR 1 350 298 A**,** aus der JP 58 195222 A, die als nächstliegender Stand der Technik angesehen wird und aus der JP 2003 083448 A bekannt.

Bei der Lösung gemäß der DE 103 09 407 A1 besteht die Schaltgabel aus einem gabelförmigen Grundkörper aus Blech. Die hülsenförmig ausgebildete Führung ist mit der Schaltgabel verschweißt. Ferner ist das Mitnehmerelement mit der Einheit, bestehend aus Schaltgabel und Führung, verbunden. Durch die Verschweißung entsteht ein fester Verbund zwischen den einzelnen Bauteilen. Allerdings ist der Herstellungsaufwand relativ hoch.

Die DE 199 27 321 A1 zeigt eine Schaltgabel aus Kunststoffmaterial. Sie hat einen Grundkörper mit zwei Armen in U-Form und einen Mitnehmer für die Gabel. Der Grundkörper, die beiden Arme und eine Welle, die zur Führung geeignet ist, sind einstückig aus Kunststoff hergestellt. Dabei ist der Mitnehmer durch einen bei der Formung des Grundkörpers integrierten Einsatz ausgebildet. Das zum Einsatz kommende Kunststoffmaterial hat jedoch nicht die Festigkeit wie ein Bauteil aus Metall.

Aus der DE 100 45 506 A1 ist eine Schaltgabel bekannt, die einen Grundkörper aufweist, der die Schaltarme zum Ansteuern der Schaltmuffe aufweist sowie eine Schaltschiene, die für die Lagerung und Führung im Getriebegehäuse vorgesehen ist. Dabei werden der Grundkörper und die Schaltschiene jeweils in einem Stanz- und Pressverfahren hergestellt und dann durch Laserschwei-ßen miteinander verbunden. Auch hierdurch ergibt sich ein relativ hoher Fertigungsaufwand.

Die DE 100 32 163 A1 offenbart eine Betätigungsvorrichtung für ein Zahnräderwechselgetriebe, die als Verbundteil gestaltet ist und ein aus einem spritzfähigen oder gießfähigen Werkstoff hergestelltes Führungsrohr aufweist, an dem die Schaltgabel aus Metall und der Mitnehmer befestigt sind. Der Herstellaufwand für eine solche Betätigungsvorrichtung ist gleichermaßen relativ hoch.

Ähnliche Lösungen sind aus der DE 43 22 586 A1**,** aus der DE 101 25 098 A1**,** aus der DE 101 25 450 A1 und aus der DE 102 09 227 A1 bekannt.

Den vorbekannten Lösungen ist gemein, dass sie entweder hinsichtlich der Bauteilfestigkeit beschränkt sind, wenn nämlich Kunststoff zum Einsatz kommt, oder dass der Fertigungs- und Montageaufwand relativ hoch ist.

### Aufgabe der Erfindung

Der vorliegenden Erfindung liegt daher die Aufgabe zugrunde, eine Betätigungsvorrichtung für eine Schaltmuffe der eingangs genannten Art so fortzubilden, dass die genannten Nachteile vermieden werden. Die Vorrichtung soll also sowohl eine hohe Bauteilfestigkeit aufweisen als auch in besonders wirtschaftlicher Weise herstellbar sein.

### Zusammenfassung der Erfindung

Die Lös u n g dieser Aufgabe durch die Erfindung ist dadurch gekennzeichnet, dass einer der Arme der Schaltgabel durch einen aus dem Blechteil ausgestanzten und aus der Ebene des Blechteils herausgebogenen Abschnitt gebildet wird.

Der Herstellaufwand wird hierdurch wesentlich reduziert, so dass eine besonders wirtschaftliche Produktion der Vorrichtung möglich wird. Durch den einteiligen Verbund ergibt sich auch eine hohe Bauteilsteifigkeit. Da ein metallisches Blech als Grundmaterial der Vorrichtung zum Einsatz kommt, ist die Bauteilfestigkeit gleichermaßen sehr hoch.

Das Blechteil ist im Ausgangszustand vorzugsweise eben ausgebildet und weist eine im wesentlichen konstante Blechdicke auf.

Mindestens ein Arm kann sich von der Basis der Schaltgabel zum Ende des Arms verjüngen; die Verjüngung erfolgt dabei bevorzugt in Achsrichtung der Schaltmuffe.

Eine besonders einfache Herstellung des einen Arms wird erreicht, wenn dieser durch zweimaliges Abbiegen des Blechteils gegenüber der Basis der Schaltgabel gebildet ist. Der von der Basis der Schaltgabel entfernte Teil des Arms kann dabei im wesentlichen rechtwinkelig zur Basis angeordnet sein. Entsprechend kann der andere Arm der Schaltgabel durch einmaliges Abbiegen des Blechteils gegenüber der Basis der Schaltgabel gebildet werden; auch dieser Arm kann im wesentlichen rechtwinkelig zur Basis angeordnet sein.

Eine Weiterbildung sieht vor, dass zwei in Achsrichtung der Schaltmuffe und in entgegengesetzte Richtungen weisende Führungselemente aus dem Blechteil ausgebildet sind. Diese können als sich in Achsrichtung erstreckende Stifte ausgebildet sein; die Stifte können eine im Querschnitt rechteckige oder quadratische Form aufweisen.

Die Betätigungsvorrichtung kommt bevorzugt bei Kraftfahrzeug-Schaltgetrieben zum Einsatz.

In vorteilhafter Weise werden durch den Erfindungsvorschlag Bauteile eingespart, d. h. die Betätigungsvorrichtung kann aus sehr wenigen einzelnen Bauteilen hergestellt werden.

Auch die Fügeprozesse bei der Herstellung der Vorrichtung werden reduziert bzw. sie fallen vollständig weg. Es ist namentlich kein Schweißen oder Verprägen erforderlich, um die Vorrichtung herzustellen.

Dadurch ergibt sich auch, dass es zu keiner Beeinträchtigung der Vorrichtung durch Wärmeeinfluss kommt.

Die komplette Herstellung der Betätigungsvorrichtung ist in einer einzigen Werkzeugmaschine (Bearbeitungszentrum) möglich, wenn diese mit entsprechenden Werkzeugen ausgestattet ist.

Durch die Integration aller relevanten Funktionen in das einstückige Bauteil wird die Toleranzkette reduziert, so dass eine höhere Bauteilgenauigkeit mit geringerem Aufwand erzielbar ist. Ein Aneinanderfügen unterschiedlicher Bauteile entfällt.

Von Vorteil ist ferner, dass deshalb eine verbesserte Funktion der Vorrichtung zu erwarten ist, da der Kraftverlauf im Bauteil aufgrund einer höheren Homogenität des Teils verbessert ist. Weiterhin sind im Vergleich zu den vorbekannten Lösungen geringere Verformungen zu erwarten, da die Vorrichtung stabiler bzw. fester ausgestaltet werden kann. Es ergeben sich weiterhin geringere Spannungsspitzen im Material.

Die Bauteilvielfalt kann durch den Erfindungsvorschlag reduziert werden, so dass sich auch die Logistik einfacher gestaltet.

Die Kostenreduzierungen ergeben sich daher nicht nur durch die einfachere Fertigungsweise der Betätigungsvorrichtung.

### Kurze Beschreibung der Figuren

In den Zeichnungen ist ein Ausführungsbeispiel der Erfindung dargestellt. Es zeigen:
- Fig. 1: die Vorderansicht einer Betätigungsvorrichtung für eine Schaltmuffe samt Schaltmuffe, die teilweise geschnitten dargestellt ist,
- Fig. 2: die zu Fig. 1 entsprechende Draufsicht auf die Betätigungsvorrichtung,
- Fig. 3: die zu Fig. 1 entsprechende Seitenansicht, aus Blickrichtung B gemäß Fig. 2 betrachtet,
- Fig. 4: die zu Fig. 1 entsprechende Seitenansicht, aus Blickrichtung C gemäß Fig. 2 betrachtet, und

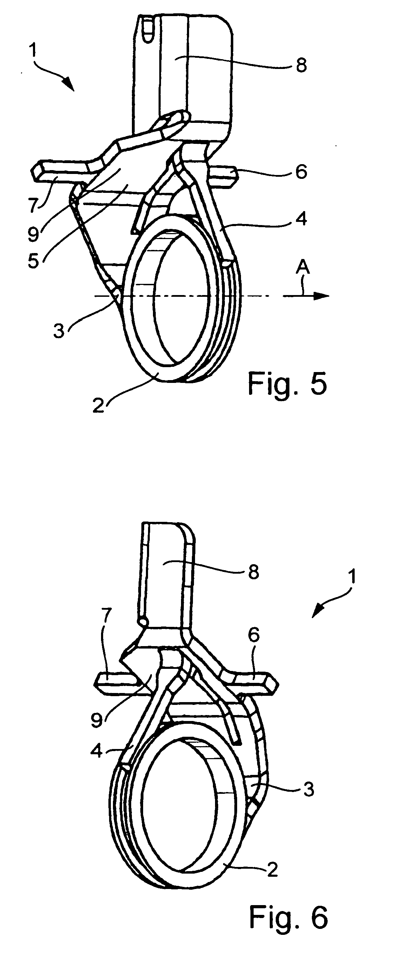

- Fig. 5: bis

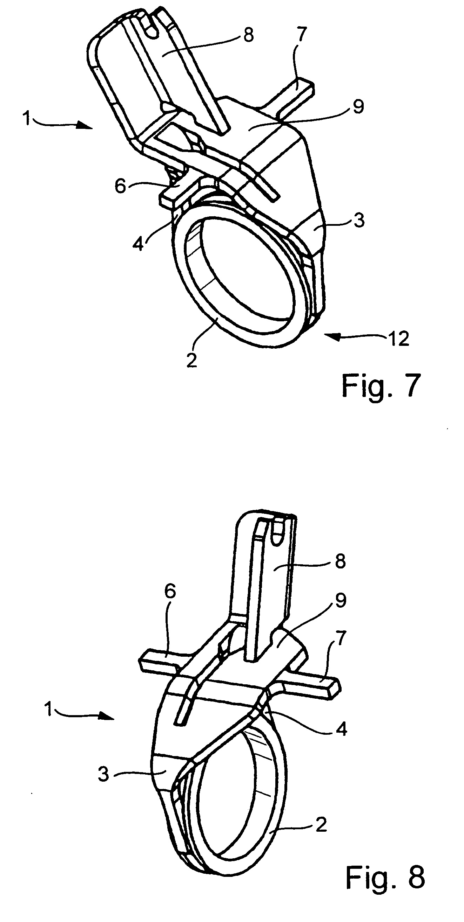

- Fig. 8: die Betätigungsvorrichtung samt Schaltmuffe in perspektivischer Ansicht und aus unterschiedlichen Blickrichtungen betrachtet.

### Ausführliche Beschreibung der Figuren

In den Figuren ist eine Betätigungsvorrichtung 1 zu sehen, mit der eine Schaltmuffe 2 betätigt werden kann, d. h. mit der die Schaltmuffe 2 in Achsrichtung A verschoben werden kann, um einen Schaltvorgang in einem Zahnräderwechselgetriebe in bekannter Weise durchzuführen.

Ein funktionswesentlicher Teil der Betätigungsvorrichtung 1 ist zunächst die Schaltgabel 5, die zwei Arme 3 und 4 aufweist, die in eine Ringnut 12 am Umfang der Schaltmuffe 2 eingreifen. Damit ist eine axiale Verschiebung der Schaltmuffe 2 bei entsprechender Bewegung der Schaltgabel 5 möglich.

Ferner hat die Betätigungsvorrichtung 1 mindestens ein Führungselement, das im Ausführungsbeispiel durch die beiden Elemente 7 und 6 gebildet wird. Mit diesen stiftförmigen Elementen 7, 6 wird die Betätigungsvorrichtung 1 in einem nicht dargestellten Getriebegehäuse gelagert und geführt.

Ein weiterer wesentlicher Teil der Betätigungsvorrichtung 1 ist das Mitnehmerelement 8, das mit einem Betätigungsorgan zusammenwirken kann. Bei dem Betätigungsorgan kann es sich um einen Teil eines Schaltgestänges handeln oder um einen andersartig ausgebildeten Aktuator, mit dem eine gesteuerte Bewegung in Achsrichtung A erzeugt werden kann. Das Mitnehmerelement 8 nimmt also die von dem Betätigungsorgan erzeugte Schaltkraft auf.

Alle drei funktionswesentlichen Teile, also die Schaltgabel 5 mit ihren beiden Armen 3, 4, das Führungselement 6, 7 und das Mitnehmerelement 8 sind einteilig bzw. einstückig ausgebildet. Die Betätigungsvorrichtung 1 ist nämlich aus einem ebenen Blech geformt, das im Ausgangszustand, also vor dem Beginn der Blechumformung, eine ebene Kontur hat und eine konstante Blechdicke d aufweist.

Aus dem ebenen Blech wird durch Abkanten, Stanzen, Biegen und ggf. Tiefziehen das Bauteil spanlos hergestellt, d. h. so umgeformt, wie es in den Figuren zu sehen ist. Hierzu wird zunächst ein Teil aus einer Blechtafel so ausgestanzt, dass sich die benötigte abgewickelte Kontur der Betätigungsvorrichtung ergibt. Dieses ausgestanzte Teil wird dann weiter spanlos umgeformt.

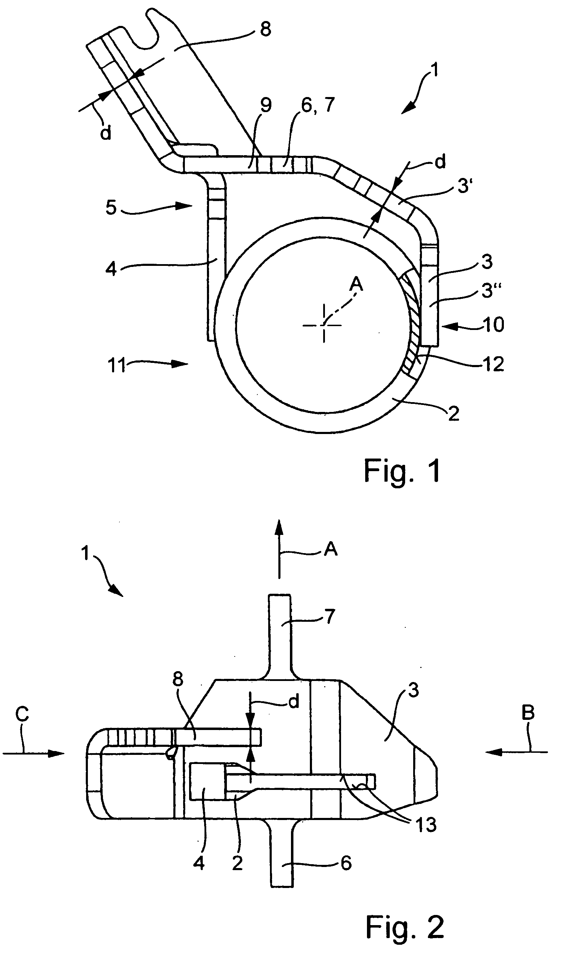

Besonders vorteilhaft ist die Ausgestaltung des einen Arms 4 der Schaltgabel 5. Die Schaltgabel 5 weist eine Basis 9 auf, die als Referenzfläche betrachtet werden kann. Aus dem Bereich der Basis 9 sowie des angrenzenden Teils des anderen Arms 3 wird eine streifenförmige Kontur 13, s. Fig. 2, teilweise ausgestanzt, wobei jedoch das eine Ende dieser Kontur 13 stoffschlüssig mit der Basis 9 verbunden bleibt. Die aus dem Material der Basis 9 gelöste Zunge wird dann aus der Ebene der Basis 9 herausgebogen, und zwar - wie es am besten in Fig. 1 zu sehen ist - etwa rechtwinkelig zur Basis 9. Hierdurch wird der Arm 4 ausgebildet.

Der andere Arm 3 der Schaltgabel 5 besteht aus zwei Abschnitten 3' und 3", die beide jeweils im wesentlichen gerade ausgebildet sind, jedoch jeweils um einen Winkel relativ zueinander abgekantet sind. So ist der Teil 3' des Arms 3 gegenüber der Basis 9 abgewinkelt (s. Fig. 1); ebenfalls ist der Teil 3" des Arms 3 relativ zum Teil 3' des Arms 3 abgewinkelt.

Die Enden 10 und 11 der beiden Arme 3 und 4 sind dabei im wesentlichen rechtwinkelig zur Basis 9 angeordnet, so dass sich ein Schaltmaul ergibt, das in die Ringnut 12 der Schaltmuffe 2 eingreift.

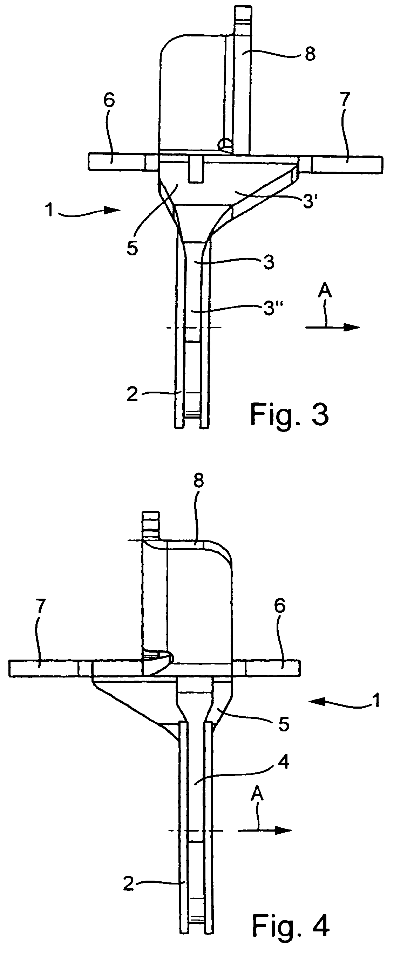

Ferner ist vorgesehen, dass sich insbesondere der Arm 3 der Schaltgabel von der Basis 9 aus in Richtung des Endes 10 des Arms 3 verjüngt, wie es gut in Fig. 3 gesehen werden kann.

Im Endbereich 10 des Arms 3 weist dieser, genauso wie der Arm 4, nur noch eine Breite in Achsrichtung A auf, die derjenigen der Ringnut 12 entspricht bzw. mit Spiel in dieser läuft.

### Bezugszeichenliste

- 1: Betätigungsvorrichtung
- 2: Schaltmuffe
- 3: Arm
- 3': Teil des Arms
- 3": Teil des Arms
- 4: Arm
- 5: Schaltgabel
- 6: Führungselement
- 7: Führungselement
- 8: Mitnehmerelement
- 9: Basis der Schaltgabel
- 10: Ende des Arms
- 11: Ende des Arms
- 12: Ringnut
- 13: streifenförmige Kontur

- A: Achsrichtung
- d: Dicke des Blechs

## Patentansprüche

1. Betätigungsvorrichtung (1) für eine Schaltmuffe (2) in einem Zahnräderwechselgetriebe, mit einer zwei Arme (3, 4) aufweisenden Schaltgabel (5) und mindestens einem Führungselement (6, 7) zum Führen der Betätigungsvorrichtung (1) in Achsrichtung (A) der Schaltmuffe (2) sowie einem Mitnehmerelement (8), das zum Zusammenwirken mit einem Betätigungsorgan geeignet ist, wobei die Schaltgabel (5), das mindestens eine Führungselement (6, 7) und das Mitnehmerelement (8) einteilig und aus einem einzigen Blechteil ausgebildet sind,
**dadurch gekennzeichnet,**
**dass** einer der Arme (4) der Schaltgabel (5) durch einen aus dem Blechteil ausgestanzten und aus der Ebene des Blechteils herausgebogenen Abschnitt gebildet wird.

2. Betätigungsvorrichtung nach Anspruch 1, **dadurch gekennzeichnet, dass** das Blechteil im Ausgangszustand eben ausgebildet ist und eine im wesentlichen konstante Blechdicke (d) aufweist.

3. Betätigungsvorrichtung nach Anspruch 1, **dadurch gekennzeichnet, dass** sich mindestens ein Arm (3, 4) von der Basis (9) der Schaltgabel (5) zum Ende (10, 11) des Arms (3, 4) verjüngt.

4. Betätigungsvorrichtung nach Anspruch 3, **dadurch gekennzeichnet, dass** die Verjüngung in Achsrichtung (A) der Schaltmuffe (2) erfolgt.

5. Betätigungsvorrichtung nach Anspruch 1, **dadurch gekennzeichnet, dass** ein Arm (3', 3") durch zweimaliges Abbiegen des Blechteils gegenüber der Basis (9) der Schaltgabel (5) gebildet ist.

6. Betätigungsvorrichtung nach Anspruch 5, **dadurch gekennzeichnet, dass** der von der Basis (9) der Schaltgabel (5) entfernte Teil (3") des Arms (3) im wesentlichen rechtwinkelig zur Basis (9) angeordnet ist.

7. Betätigungsvorrichtung nach Anspruch 1, **dadurch gekennzeichnet, dass** ein Arm (4) durch einmaliges Abbiegen des Blechteils gegenüber der Basis (9) der Schaltgabel (5) gebildet ist.

8. Betätigungsvorrichtung nach Anspruch 7, **dadurch gekennzeichnet, dass** der Arm (4) im wesentlichen rechtwinkelig zur Basis (9) angeordnet ist.

9. Betätigungsvorrichtung nach Anspruch 1, **dadurch gekennzeichnet, dass** zwei in Achsrichtung (A) der Schaltmuffe (2) und in entgegengesetzte Richtungen weisende Führungselemente (6, 7) aus dem Blechteil ausgebildet sind.

10. Betätigungsvorrichtung nach Anspruch 9, **dadurch gekennzeichnet, dass** die Führungselemente (6, 7) als sich in Achsrichtung (A) erstreckende Stifte ausgebildet sind.

11. Betätigungsvorrichtung nach Anspruch 10, **dadurch gekennzeichnet, dass** die Stifte eine im Querschnitt rechteckige oder quadratische Form aufweisen.

## Claims

1. Actuating device (1) for a gearshift sleeve (2) in a variable speed gear transmission, comprising a gearshift fork (5) having two arms (3, 4), and at least one guide element (6, 7) for guiding the actuating device (1) in axis direction (A) of the gearshift sleeve (2) as also an entraining element (8) that is suitable for cooperating with an actuating member, the gearshift fork (5), the at least one guide element (6, 7) and the entraining element (8) being made in one piece with one another out of one single sheet metal part,
**characterised in that**,
one of the arms (4) of the gearshift fork (5) is formed by a section punched out of the sheet metal part and bent out of the plane of the sheet metal part.

2. Actuating device according to claim 1, **characterised in that**, in the initial state, the sheet metal part has a planar configuration and a substantially uniform sheet metal thickness (d).

3. Actuating device according to claim 1, **characterised in that** at least one arm (3, 4) of the gearshift fork (5) tapers from the base (9) of the gearshift fork (5) towards the end (10, 11) of the arm (3, 4).

4. Actuating device according to claim 3, **characterised in that** tapering is effected in the axis direction (A) of the gearshift sleeve (2).

5. Actuating device according to claim 1, **characterised in that** one arm (3', 3") is formed by a twofold bending of the sheet metal part relative to the base (9) of the gearshift fork (5).

6. Actuating device according to claim 5, **characterised in that** the part (3") of the arm (3) distant from the base (9) of the gearshift fork (5) is arranged substantially at a right angle to the base (9).

7. Actuating device according to claim 1, **characterised in that** one arm (4) is made by a single bending of the sheet metal part relative to the base (9) of the gearshift fork (5).

8. Actuating device according to claim 7, **characterised in that** the arm (4) is arranged substantially at a right angle to the base (9).

9. Actuating device according to claim 1, **characterised in that** two guide elements (6, 7) pointing in axis direction (A) of the gearshift sleeve (2) and in opposite directions are configured out of the sheet metal part.

10. Actuating device according to claim 9, **characterised in that** the guide elements (6, 7) are configured in the form of pins extending in axis direction (A).

11. Actuating device according to claim 10, **characterised in that** the pins are rectangular or square-shaped in cross-section.

## Revendications

1. Dispositif d'actionnement (1) pour un manchon (2) de changement de vitesse dans une transmission par engrenages, ledit dispositif comprenant une fourchette (5) de changement de vitesse ayant deux bras (3, 4), et comprenant, en plus, au moins un élément (6, 7) de guidage pour guider le dispositif d'actionnement (1) en direction (A) de l'axe du manchon (2) de changement de vitesse ainsi qu'un entraîneur (8) qui est adapté à coopérer avec un organe d'actionnement, ladite fourchette (5) de changement de vitesse, l'au moins un élément (6, 7) de guidage et l'entraîneur (8) étant configurés d'un seul tenon, l'un avec l'autre, à partir d'une seule pièce en tôle,
**caractérisé en ce que**
l'un des bras (4) de la fourchette (5) de changement de vitesse est formé par une section découpée dans la pièce en tôle et cintrée en dehors du plan de la pièce en tôle.

2. Dispositif d'actionnement selon la revendication 1, **caractérisé en ce que**, à l'état de départ, la pièce en tôle a une configuration plate et une épaisseur (d) de tôle sensiblement constante.

3. Dispositif d'actionnement selon la revendication 1, **caractérisé en ce que**, au moins l'un des bras (3, 4) s'amincit en s'étendant à partir de la base (9) de la fourchette (5) de changement de vitesse vers l'extrémité (10, 11) du bras (3, 4).

4. Dispositif d'actionnement selon la revendication 3, **caractérisé en ce que** l'amincissement est effectué en direction (A) de l'axe du manchon (2) de changement de vitesse.

5. Dispositif d'actionnement selon la revendication 1, **caractérisé en ce que** l'un (3', 3") des bras est formé par cintrage double de la pièce en tôle par rapport à la base (9) de la fourchette (5) de changement de vitesse.

6. Dispositif d'actionnement selon la revendication 5, **caractérisé en ce que** la partie (3") du bras (3) éloignée de la base (9) de la fourchette (5) de changement de vitesse est agencée sensiblement à angle droit de la base (9).

7. Dispositif d'actionnement selon la revendication 1, **caractérisé en ce que**, l'un des bras (4) est formé par cintrage unique de la pièce en tôle par rapport à la base (9) de la fourchette (5) de changement de vitesse.

8. Dispositif d'actionnement selon la revendication 7, **caractérisé en ce que** le bras (4) est agencé sensiblement à angle droit de la base (9).

9. Dispositif d'actionnement selon la revendication 1, **caractérisé en ce que** deux éléments (6, 7) de guidage orientés en direction (A) de l'axe du manchon (2) de changement de vitesse et en des directions opposées, l'une à l'autre, sont configurés à partir de la pièce en tôle.

10. Dispositif d'actionnement selon la revendication 9, **caractérisé en ce que** les éléments (6, 7) de guidage sont configurés sous la forme de goupilles qui s'étendent en direction (A) de l'axe.

11. Dispositif d'actionnement selon la revendication 10, **caractérisé en ce que**, en section droite, les goupilles ont une forme rectangulaire ou carrée.
